# FASCICULE DE BREVET EUROPEEN

(11) **EP 1 597 017 B1**
(45) Date de publication et mention de la délivrance du brevet: **06.09.2006**
(21) Numéro de dépôt: 04707959.5
(22) Date de dépôt: 04.02.2004
(51) Int. Cl.: B23Q 1/54, B25J 9/16

(54) **DISPOSITIF DE DEPLACEMENT ET D ORIENTATION D UN OBJET D ANS L ESPACE ET UTILISATION EN USINAGE RAPIDE**
VORRICHTUNG ZUR BEWEGUNG UND AUSRICHTUNG EINES OBJEKTS IM RAUM UND VERWENDUNG DAVON BEI SCHNELLBEARBEITUNG
DEVICE FOR THE MOVEMENT AND ORIENTATION OF AN OBJECT IN SPACE AND USE THEREOF IN RAPID MACHINING

(30) Priorité: 05.02.2003 FR 0301350
(43) Date de publication de la demande: 23.11.2005
(73) Titulaire: CENTRE NATIONAL DE LA RECHERCHE SCIENTIFIQUE (CNRS), 75016 Paris (FR); ECOLE CENTRALE DE NANTES, 44321 Nantes Cedex 03 (FR)
(72) Inventeur: CHABLAT, Damien, F-44300 Nantes (FR); WENGER, Philippe, F-44980 Sainte Luce-sur-Loire (FR)
(74) Mandataire: Lagrange, Jacques Etienne M.M.
(86) Numéro de dépôt international: PCT/FR2004/000259
(87) Numéro de publication internationale: WO 2004/071705

(56) Documents cités:
- WO-A-02/49811
- WO-A-02/085580
- DE-A- 19 955 520
- FR-A- 2 757 530
- FR-A- 2 779 080
- US-A- 3 478 436
- US-A- 4 752 160
- US-A- 5 587 937
- US-A- 5 656 905
- US-A- 5 966 991
- US-B1- 6 497 548
- GOSSELIN C M ET AL: "ON THE KINEMATIC DESIGN OF SPHERICAL THREE-DEGREE-OF-FREEDOM PARALLEL MANIPULATORS" INTERNATIONAL JOURNAL OF ROBOTICS RESEARCH, SAGE SCIENCE PRESS, THOUSAND OAKS, US, vol. 12, no. 4, 1 août 1993 (1993-08-01), pages 394-402, XP000383999 ISSN: 0278-3649
- HUANG Z ET AL: "Motion characteristics and rotational axis analysis of three DOF parallel robot mechanisms" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, 22 octobre 1995 (1995-10-22), pages 67-71, XP010194354 ISBN: 0-7803-2559-1
- GOSSELIN C M ET AL: "ON THE DEVELOPMENT OF THE AGILE EYE" IEEE ROBOTICS & AUTOMATION MAGAZINE, IEEE SERVICE CENTER, PISCATAWAY, NJ, US, vol. 3, no. 4, 1 décembre 1996 (1996-12-01), pages 29-37, XP000643780 ISSN: 1070-9932

## Description

L'invention concerne un dispositif de déplacement et d'orientation d'un objet dans l'espace possédant au moins deux degrés de liberté en translation et au moins deux degrés de liberté en rotation et de type parallèle avec les caracteristiques mentionées dans le préambule de la revendication 1, connues du document WO 02/085580 A.

On utilise des dispositifs de déplacement et d'orientation d'objets dans l'espace, par exemple pour effectuer des usinages de grande précision et/ou à grande vitesse. L'objet dont on assure le déplacement et l'orientation peut être constitué par un outil ou encore par la pièce sur laquelle on effectue un usinage.

En particulier, on doit disposer, dans certaines industries, de machines-outils telles que des fraiseuses pour réaliser des usinages à grande vitesse dont le déplacement peut être réalisé, par exemple suivant cinq axes dont trois axes de déplacement en translation et deux axes de déplacement en rotation.

De manière plus générale, dans le cas de machines d'usinage de pièces de forme complexe ou de systèmes de manipulation d'objets de grande précision, il peut être nécessaire d'utiliser des dispositifs de déplacement comportant au moins deux axes de déplacement en translation et deux axes de déplacement en rotation.

Jusqu'ici, de tels dispositifs et en particulier les fraiseuses à commande numérique utilisées dans l'industrie utilisent une construction de type sériel, c'est-à-dire une construction dans laquelle les axes de déplacement et les moyens de motorisation correspondants sont montés en série. Il existe plusieurs familles de dispositifs ou machines qu'on peut classifier selon leur nombre de degrés de liberté. Les machines les plus courantes sont des machines à trois, quatre ou cinq axes, c'est-à-dire à trois, quatre ou cinq degrés de liberté. De telles machines utilisant des constructions de type sériel sont peu adaptées aux besoins de l'usinage à grande vitesse, du fait de leur grande inertie, un axe amont de la machine devant supporter un axe aval et ses moyens de motorisation.

Pour ce type d'application, il est donc souhaitable d'utiliser des constructions de type parallèle, c'est-à-dire comportant des moyens de motorisation portés par un bâti fixe de la machine, avec une transmission non motorisée des mouvements des différentes parties du dispositif.

Jusqu'ici, les machines-outils de type parallèle à au moins cinq degrés de liberté de déplacement d'un outil ou d'une pièce utilisent principalement une architecture de type "Gough-Stewart", ces machines étant appelées machines hexapodes. De telles machines hexapodes présentent un modèle géométrique direct qui possède jusqu'à quarante solutions et dont les frontières ainsi que la position des configurations singulières sont difficiles à caractériser. De faibles variations de paramètres de conception peuvent entraîner d'importantes modifications concernant la stabilité du modèle géométrique direct et des performances de telles machines. De plus, les facultés d'orientation des machines hexapodes sont très limitées. Dans le cas d'une machine-outil telle qu'une fraiseuse à cinq axes, une machine hexapode nécessite la gestion de la redondance du fait qu'elle possède six degrés de liberté.

On connaît également un dispositif hybride à cinq degrés de liberté comportant un porteur de type parallèle et un poignet sphérique de type sériel. Les actionneurs du porteur ne sont pas fixes et le mouvement produit par ces actionneurs n'est pas un simple mouvement de translation. Il existe vingt-quatre solutions au modèle géométrique direct de ce dispositif et il n'existe pas de domaine d'unicité dans l'espace de travail. Pour maintenir la broche à orientation constante, il est nécessaire de changer l'orientation du poignet sphérique. En outre, le porteur doit supporter le poids du poignet et de ses moteurs.

Dans le domaine de l'usinage à grande vitesse, par exemple pour la réalisation de fraiseuses, il est donc souhaitable d'utiliser des dispositifs de déplacement et d'orientation d'outils, de type parallèle, qui possèdent un modèle géométrique et cinématique simple ainsi qu'un espace de travail aux frontières régulières et parfaitement définies. Il est nécessaire également que les propriétés cinéto-statiques du dispositif soient proches de celles d'une machine-outil classique et, pour cela, que le dispositif présente une configuration isotrope dans son espace de travail, en contrôle de position comme en orientation. En outre, les facteurs d'amplification de vitesse du dispositif doivent rester bornés dans tout l'espace de travail accessible.

On connaît un dispositif de déplacement dans l'espace d'un objet suivant trois axes en translation qui comporte trois jambes en forme de parallélogrammes montées de manières articulées à une première extrémité, chacune sur un élément mobile déplacé par un moyen de déplacement en translation porté par un bâti fixe, suivant une glissière portée par le bâti fixe et à une seconde extrémité, sur un support de l'objet à déplacer. Un tel dispositif ne permet pas de réaliser une orientation de l'objet suivant au moins deux axes, par commande depuis le bâti fixe.

On connaît également par le US-5,966,991 un dispositif d'orientation du type poignet sphérique qui comporte deux actionneurs d'entraînement en rotation de deux axes sur lesquels sont montées des premières extrémités de deux bras dont les secondes extrémités sont montées articulées, pour l'une, sur le support d'objet et, pour l'autre, sur un bras intermédiaire lui-même monté articulé sur le support d'objet.

Tous les axes d'articulation et d'entraînement en rotation du dispositif sont concourants en un centre de rotation sphérique du dispositif. Pour son actionnement, un tel dispositif d'orientation demande l'utilisation d'actionneurs en rotation sur les axes desquels sont fixés les bras du dispositifs d'orientation sphérique. Ces dispositifs de déplacement dans l'espace et d'orientation connus de la technique ne sont pas réalisés de manière à pouvoir être associés pour constituer un système de déplacement et d'orientation de type parallèle.

Le WO-02/85580 décrit un dispositif de déplacement d'un outil de type parallèle. Les déplacements en translation de l'outil sont transmis par des jambes articulées et des mouvements de rotation sont transmis à l'outil par des axes montés dans la direction longitudinale des jambes.

Toutefois, le dispositif ne comporte pas de mécanisme d'orientation à centre de rotation sphérique.

Le but de l'invention est donc de proposer un dispositif de déplacement et d'orientation d'un objet dans l'espace comportant un support d'objet porté par un support mobile intermédiaire relié à un bâti fixe par des moyens de liaison articulés, et présentant des caractéristiques adaptées à une utilisation telle qu'envisagée plus haut et en particulier au cas de l'usinage à grande vitesse.

Dans ce but, le mécanisme d'orientation du support d'object du dispositif suivant l'invention comporte : au moins deux ensembles de déplacement en rotation comportant chacun un axe de commande monté rotatif sur le support mobile intermédiaire et entraîné en rotation par un actionneur de mise en rotation respectif portés par le bâti fixe et relié à l'axe de commande correspondant par un arbre de transmission monté sur des cardans et un premier bras courbe solidaire, à une première extrémité, de l'axe de commande correspondant et relié de manière articulée au support d'objet, à une seconde extrémité, par au moins un axe d'articulation, les axes de commande et les axes d'articulation des bras courbes ayant des directions orthogonales entre elles et concourantes en un point O constituant un point de rotation sphérique.

Selon différents modes de réalisation de l'invention qui peuvent être pris isolément ou en combinaison :
- le dispositif de déplacement comporte au moins deux actionneurs de déplacement en translation, suivant au moins deux axes d'un trièdre trirectangle, de parties d'extrémité d'au moins deux moyens de liaison articulés comportant chacun une jambe articulée s'étendant dans une direction générale longitudinale entre le bâti fixe et le support mobile intermédiaire ;
- la jambe articulée comporte deux longerons de direction longitudinale formant avec des pièces de liaison d'extrémité, un parallélogramme articulé reliant un élément mobile d'un actionneur de déplacement en translation et le support mobile intermédiaire, de manière que le parallélogramme articulé puisse se déformer dans son plan et pivoter autour d'un axe contenu dans son plan pour se déplacer dans une direction normale à son plan ;
- le mécanisme d'orientation comporte au moins deux ensembles de déplacement en rotation du support d'outil par rapport au support intermédiaire autour d'au moins deux axes du trièdre trirectangle ;
- l'arbre de transmission de chacun des ensembles de déplacement en rotation est disposé entre les longerons d'une jambe articulée correspondante ;
- les moyens de déplacements du support mobile intermédiaire comportent chacun un premier moteur linéaire de déplacement en translation d'une partie d'extrémité d'un moyen de liaison articulé porté par le bâti fixe, le moyen de liaison articulé est réalisé sous la forme d'un premier cadre articulé comportant deux longerons parallèles, un premier axe à la première extrémité du moyen de liaison articulé relié à un élément de poussée et de traction déplacé par le moteur linéaire par l'intermédiaire de paliers montés rotatifs sur le premier axe, un second axe parallèle au premier axe à la seconde extrémité du moyen de liaison articulé, une pièce de liaison du mécanisme d'orientation à l'élément de liaison articulé relié à des paliers montés rotatifs sur le second axe dans laquelle est monté rotatif un axe de commande du mécanisme d'orientation, un second moteur linéaire porté par le bâti fixe relié par l'intermédiaire de tiges et d'articulation et à un second cadre en parallélogramme articulé constitué par un longeron sensiblement parallèle aux longerons du premier cadre et deux montants reliés à des paliers montés rotatifs respectivement sur le premier et le second axes du premier cadre de l'élément articulé, placés dans une disposition perpendiculaire au premier et au second axes et parallèles entre eux et reliés de manière articulée à une première et à une seconde extrémités du longeron du second cadre articulé en parallélogramme, les tiges de liaison de l'élément mobile du second moteur linéaire et du second cadre articulé étant reliées au second cadre articulé au niveau d'une première extrémité dans le prolongement du premier montant solidaire du palier monté sur le premier axe et le palier de montage rotatif du second montant sur le second axe étant solidaire d'une couronne dentée à denture conique engrenant avec un pignon à denture conique solidaire de l'axe de commande du mécanisme d'orientation, à la seconde extrémité de l'élément articulé ;
- le premier bras courbe d'un premier ensemble de déplacement est relié au support d'objet, à sa seconde extrémité, par un axe d'articulation et le premier bras courbe du second ensemble de déplacement est relié de manière articulée à sa seconde extrémité à une première extrémité d'un bras courbe intermédiaire dont la seconde extrémité est reliée de manière articulée au support d'objet ;
- il comporte trois ensembles de déplacement en rotation comportant chacun un axe de commande monté rotatif sur le support mobile intermédiaire et entraîné en rotation par un actionneur respectif, un premier bras courbe solidaire à une première extrémité d'un axe de commande respectif et un second bras courbe intermédiaire articulé, à une première extrémité, sur une seconde extrémité du premier bras courbe et, à une seconde extrémité, sur le support d'objet.

Le dispositif suivant l'invention peut être utilisé en particulier :
- pour réaliser le déplacement d'un outil dans une opération d'usinage rapide de formes complexes ;
- pour réaliser le déplacement d'une torche laser dans une opération de découpage de formes complexes.
- pour réaliser le déplacement d'une torche laser assurant la polymérisation d'une matière plastique, dans une opération de réalisation rapide d'un prototype ;
- pour réaliser une interface de réalité virtuelle, avec ou sans retour haptique.

Un dispositif d'accouplement élastique peut être disposé entre un premier et un second cardans de l'arbre de transmission.

L'arbre de transmission peut être relié à sa seconde extrémité, par une articulation à la cardan, à une tige de transmission reliée, par l'intermédiaire d'une douille d'accouplement, à l'arbre de sortie d'un moteur porté par le bâti fixe, la douille d'accouplement comportant des rainures internes longitudinales axiales et la tige de transmission des cannelures longitudinales correspondantes, de manière à assurer un entraînement en rotation et un déplacement libre en translation de la tige de transmission et de l'arbre de transmission relié à la tige par l'articulation à la cardan, lors de déplacements de la jambe articulée correspondante.

Afin de bien faire comprendre l'invention, on va maintenant décrire, à titre d'exemple, en se référant aux figures jointes en annexe, un dispositif suivant l'invention et suivant plusieurs variantes à quatre, cinq ou six degrés de liberté.

La figure 1 est une vue en perspective d'un dispositif de déplacement suivant l'invention à cinq degrés de liberté.

La figure 2 est une vue en perspective à plus grande échelle de la partie fonctionnelle du dispositif.

La figure 3 est une vue schématique d'une jambe articulée du dispositif à trois jambes articulées représenté sur la figure 1.

La figure 4 est une vue en perspective à plus grande échelle du mécanisme d'orientation sphérique du dispositif et de ses moyens de liaison aux trois jambes articulées.

La figure 5 est une vue en perspective d'un mécanisme d'orientation sphérique d'un dispositif suivant l'invention à trois axes.

La figure 6 est une vue en perspective d'un dispositif de déplacement suivant l'invention à quatre degré de liberté.

La figure 7 est une vue en perspective d'une jambe articulée suivant une variante de réalisation.

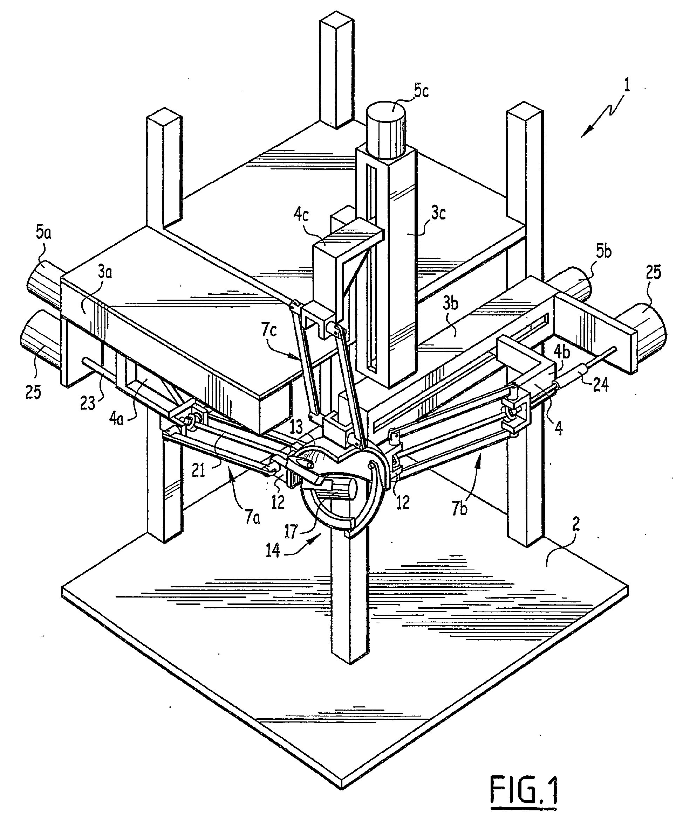

Sur la figure 1, on voit un dispositif de déplacement et d'orientation suivant l'invention à cinq degrés de liberté à trois axes de déplacement en translation et deux axes en orientation.

Le dispositif désigné de manière générale par le repère 1 comporte un bâti fixe 2 sur lequel sont fixées trois glissières 3a, 3b et 3c dont les directions longitudinales de guidage sont disposées suivant trois axes d'un trièdre trirectangle.

Sur chacune des glissières 3a, 3b, 3c, est monté mobile dans la direction longitudinale de la glissière, un chariot correspondant 4a, 4b ou 4c constituant la partie mobile d'un dispositif de déplacement en translation suivant l'un des axes du trièdre trirectangle.

Sur chacune des glissières 3a, 3b, 3c est fixé, à l'une des extrémités de la glissière, un moteur d'entraînement 5a, 5b ou 5c qui peut être un moteur électrique associé à un codeur de position et à un système de freinage. Le moteur assure l'entraînement en rotation d'une vis montée rotative suivant la direction longitudinale de la glissière sur laquelle est monté un écrou à bille solidaire d'une pièce de liaison du chariot introduite et guidée dans une ouverture longitudinale de guidage de la glissière. Entre le moteur d'entraînement et la vis à bille, peut être intercalé un accouplement élastique permettant d'amortir les vibrations et de limiter le couple transmis en cas de blocage du dispositif. Chacun des dispositifs de déplacement en translation comporte également des capteurs de fin de course et des moyens de commande électroniques.

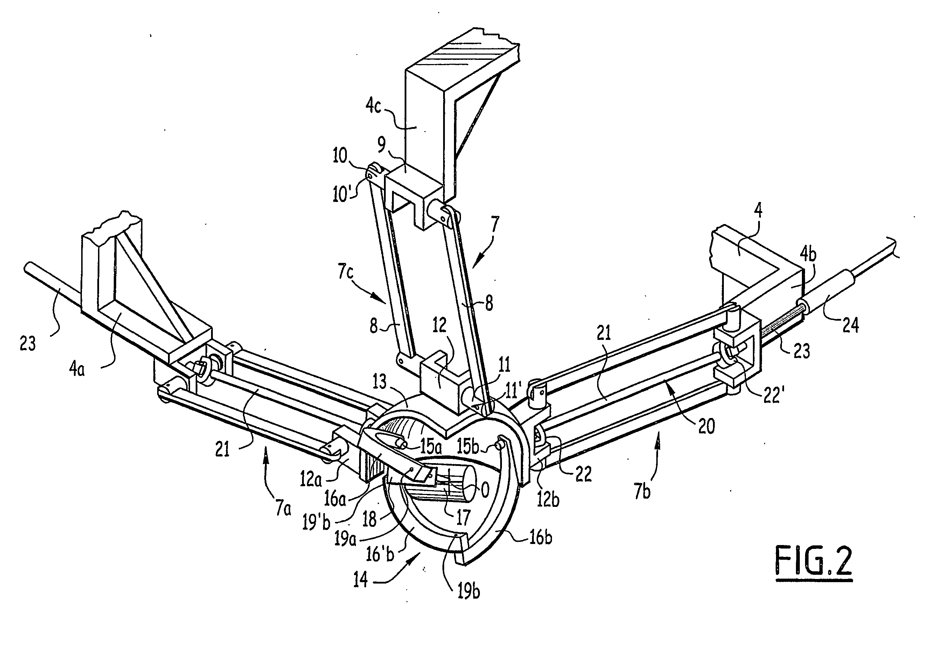

Comme il est visible en particulier sur la figure 2, chacun des chariots 4a, 4b et 4c est relié, par l'intermédiaire d'une pièce de liaison, à une jambe articulée en forme de parallélogramme qui sera désignée de manière générique par le repère 7 et par référence aux trois jambes articulées reliées aux chariots 4a, 4b et 4c par les références 7a, 7b et 7c.

On ne décrira que l'une des jambes articulées, sous forme générique, les trois jambes 7a, 7b et 7c étant réalisées de la même manière.

La jambe articulée 7 comporte deux longerons 8 parallèles entre eux disposés suivant la direction longitudinale de la jambe 7 et reliés chacun, à une première extrémité, à une pièce de liaison 9 au chariot correspondant du dispositif de déplacement en translation, par l'intermédiaire d'un premier axe 10 et d'un second axe 10' perpendiculaires entre eux. L'axe 10 est monté rotatif dans la pièce de liaison 9 et l'axe 10' assure la liaison articulée entre l'extrémité du longeron 8 et l'axe 10.

La seconde extrémité des longerons 8 est montée articulée de manière analogue sur un support de mécanisme d'orientation 12, par l'intermédiaire de deux axes 11 et 11' perpendiculaires entre eux et disposés en série.

De cette manière, lorsqu'on déplace les extrémités des bras articulés comportant les pièces de liaison 9 aux chariots, par l'intermédiaire des chariots, les jambes 7 constituées sous la forme de parallélogrammes articulés peuvent pivoter par rapport à la pièce de liaison 9 et par rapport au support de mécanisme d'orientation 12 et se déformer en parallélogramme, les longerons 8 reliés aux axes 10 et 11 restant parallèles entre eux.

Les moyens de support de mécanisme 12 de chacune des jambes articulées 7a, 7b, 7c sont fixés de manière rigidement solidaire sur un support mobile intermédiaire 13 d'un mécanisme 14 d'orientation du dispositif, à deux axes.

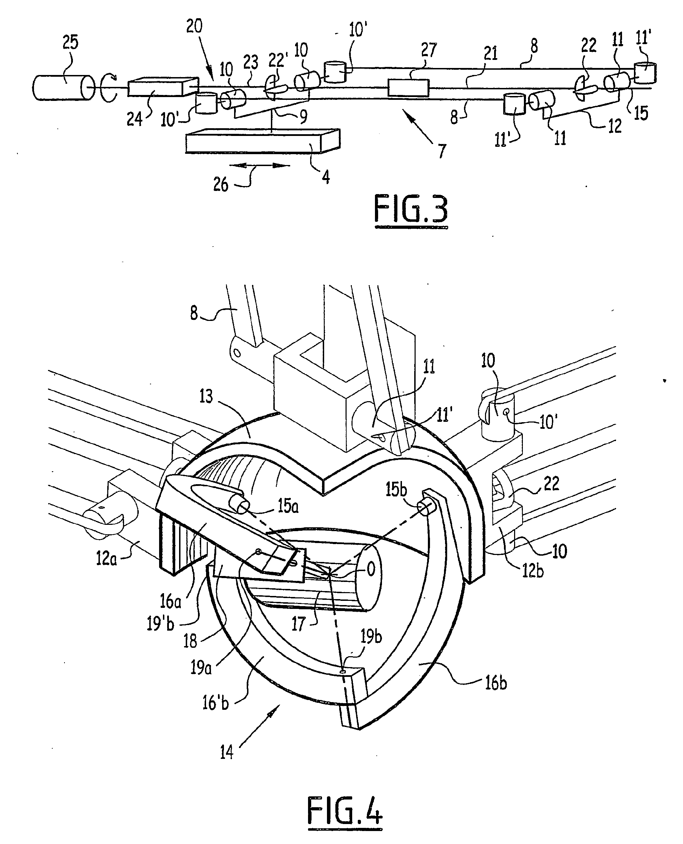

Le mécanisme d'orientation 14 et ses moyens de commande en rotation seront décrits, en particulier en se référant aux figures 2 et 4.

Le support mobile intermédiaire de mécanisme 13 présente de préférence une forme sensiblement hémisphérique, les moyens de support 12 de chacune des jambes articulées étant fixés rigidement, par exemple par vissage sur le support mobile intermédiaire 13 en forme d'enveloppe hémisphérique, dans des positions correspondant sensiblement aux intersections de l'enveloppe hémisphérique avec les axes d'un trièdre trirectangle dont le centre se trouve au centre de l'enveloppe hémisphérique.

Les deux axes de rotation du mécanisme d'orientation 14 sont commandés à partir des deux jambes articulées 7a et 7b dont les moyens de support 12a et 12b rigidement solidaires du support mobile intermédiaire de mécanisme 13 comportent chacun un palier assurant le montage rotatif d'un premier axe 15a et d'un second axe 15b qui sont concourants en un point O qui constitue le centre de rotation du moyen d'orientation 14 constitué sous la forme d'un poignet sphérique.

Sur les axes 15a et 15b, sont fixés, respectivement, un premier bras courbe 16a et un second bras courbe 16b solidaires en rotation des axes respectifs 15a et 15b.

Les bras courbes 16a et 16b ont la forme de portions d'anneau dont le rayon est un peu inférieur au rayon de l'enveloppe sphérique du support intermédiaire 13, de manière que l'ensemble du mécanisme puisse être logé à l'intérieur de l'enveloppe du support mobile intermédiaire 13 de mécanisme.

L'objet dont on assure l'orientation et le déplacement, qui peut être par exemple un outil tel qu'une fraise, qui est représenté de manière conventionnelle sur.les figures 2 et 4 et désigné par le repère 17 est fixé de manière rigidement solidaire sur un support d'objet 18 par des moyens de fixation adaptés.

Le premier bras 16a du mécanisme d'orientation est fixé de manière articulée autour d'un axe d'articulation 19a passant par le centre de rotation sphérique O du mécanisme, sur le support d'objet 18, à son extrémité opposée à l'extrémité reliée à l'axe de rotation 15a.

Le second bras 16b du mécanisme d'orientation 14 est relié, de manière articulée, par l'intermédiaire d'un axe 19b, à un bras intermédiaire 16'b qui est lui-même monté articulé autour d'un axe 19'b sur le support d'objet 18. Les axes 19a, 19b et 19'b d'articulation des bras 16a, 16b, 16'b sont orthogonaux et concourants au centre de symétrie sphérique O du dispositif 13.

La rotation du premier bras 16a et du second bras 16b est commandée par un ensemble de déplacement en rotation respectif désigné de manière générale par le repère 20.

Du fait que les ensembles de commande de rotation des bras 16a et 16b sont analogues, on ne décrira que l'un des deux ensembles de commande, désigné de manière générale par le repère 20 et associé à l'une des jambes articulées 7.

L'ensemble 20 comporte un arbre de transmission ou tige d'actionnement 21 montée entre les longerons 8 de la jambe articulée 7 dans une disposition parallèle aux longerons 8 et reliée à une première et une seconde extrémités, respectivement, par l'intermédiaire d'une première et d'une seconde articulations à la cardan 22 et 22' respectives à l'axe du bras correspondant (15a ou 15b) au niveau du moyen de support de mécanisme 12 de la jambe articulée 7 et à une tige de transmission 23, au niveau de la pièce de liaison 9 entre le chariot 4 correspondant et la jambe articulée, dans laquelle la tige de transmission 23 est montée rotative par l'intermédiaire d'un palier.

Les cardans 22 et 22' sont disposés respectivement entre les axes 10 et entre les axes 11 alignés suivant les axes géométriques de pivotement de la jambe articulée 7.

La tige de transmission 23 est elle-même reliée, par l'intermédiaire d'une douille d'accouplement 24, à l'arbre de sortie d'un moteur 25 fixé sur un support solidaire de la glissière 3 du bras articulé et du bâti fixe 2. La douille d'accouplement 24 comporte des rainures longitudinales internes et la tige de transmission 23 présente elle-même des cannelures correspondant aux rainures de la douille d'accouplement 24, de manière à assurer un accouplement en rotation de l'arbre de sortie du moteur 25 et de la tige de transmission 23, avec une latitude de déplacement en translation de la tige 23 par rapport à la douille 24 et au bâti fixe 2, pour permettre les déplacements de la jambe 7, lors des déplacements en translation du chariot 4 le long de la glissière 3.

On peut ainsi transmettre le mouvement de rotation aux bras 16a et 16b du mécanisme d'orientation, quelle que soit la position du mécanisme dans l'espace, cette position étant déterminée par le déplacement des jambes articulées 7a, 7b et 7c.

En outre, la présence des cardans 22 et 22' permet de transmettre le mouvement en rotation à l'axe et au bras du mécanisme, quel que soit le désaxement de la jambe articulée 7 par rapport à l'arbre de sortie du moteur 25.

Sur la figure 3, on a représenté de manière schématique une jambe articulée 7 du dispositif à cinq degrés de liberté tel que représenté sur les figures 1, 2 et 4 et l'ensemble de commande en rotation 20 du dispositif d'orientation sphérique relié à la jambe articulée 7.

Le chariot 4 de déplacement en translation (déplacement figuré par la double flèche 26) d'une extrémité de la jambe articulée 7 est relié par l'intermédiaire de la pièce de liaison 9 aux deux longerons 8, par l'intermédiaire des axes d'articulation 10 et 10' placés en série.

A leurs extrémités opposées, les longerons 8 sont reliés au moyen de support de mécanisme d'orientation 12 de la jambe articulée 7, par l'intermédiaire des axes d'articulation 11 et 11' placés en série. La tige d'actionnement 21 disposée entre les longerons 8 est reliée par les cardans 22 et 22', respectivement, à l'un des axes 15 du dispositif d'orientation et à la tige de transmission 23. La tige de transmission 23 est elle-même solidaire en rotation de l'arbre de sortie du moteur 25 et montée libre en translation, par l'intermédiaire de la douille d'accouplement 24.

De préférence, un dispositif d'accouplement élastique 27 disposé entre les cardans 22 et 22' de la tige d'actionnement 21 permet de compenser des jeux de montage et les tolérances de fabrication du dispositif.

Le dispositif suivant l'invention, dans sa réalisation à cinq axes telle que décrite plus haut, permet de réaliser un déplacement dans l'espace d'un outil 17 d'une manière qui peut être parfaitement contrôlée par les moyens de commande des moteurs 5a, 5b et 5c des trois jambes articulées et une orientation de l'outil suivant deux axes grâce au mécanisme d'orientation sphérique 14. Il est à remarquer que les déplacements en translation de l'outil 17 et le réglage d'orientation de l'outil peuvent être réalisés de manière totalement indépendante l'une de l'autre, l'orientation étant réalisée par les ensembles de commande de rotation 20 de deux jambes articulées, par l'intermédiaire des moteurs 25 commandés de manière totalement indépendante des moteurs 5a, 5b et 5c de déplacement en translation, l'orientation dans l'espace du mécanisme 14, c'est-à-dire de son support mobile intermédiaire 13 restant constante pendant les déplacements en translation de l'outil commandés par les trois jambes articulées.

On peut ainsi réaliser des usinages rapides et parfaitement contrôlés d'une pièce, par exemple le fraisage d'une pièce de forme complexe.

La surface enveloppe des déplacements du dispositif est parfaitement définie et les vitesses de déplacement de l'outil peuvent être contrôlées de manière précise dans tout l'espace de déplacement de l'outil.

Généralement, pour réaliser une opération d'usinage rapide tel qu'un fraisage, un dispositif de déplacement et d'orientation à cinq axes est suffisant. Cependant, dans certains cas, il peut être souhaitable de disposer d'un dispositif de déplacement et d'orientation à six degrés de liberté pour ajouter une redondance dans le réglage d'orientation.

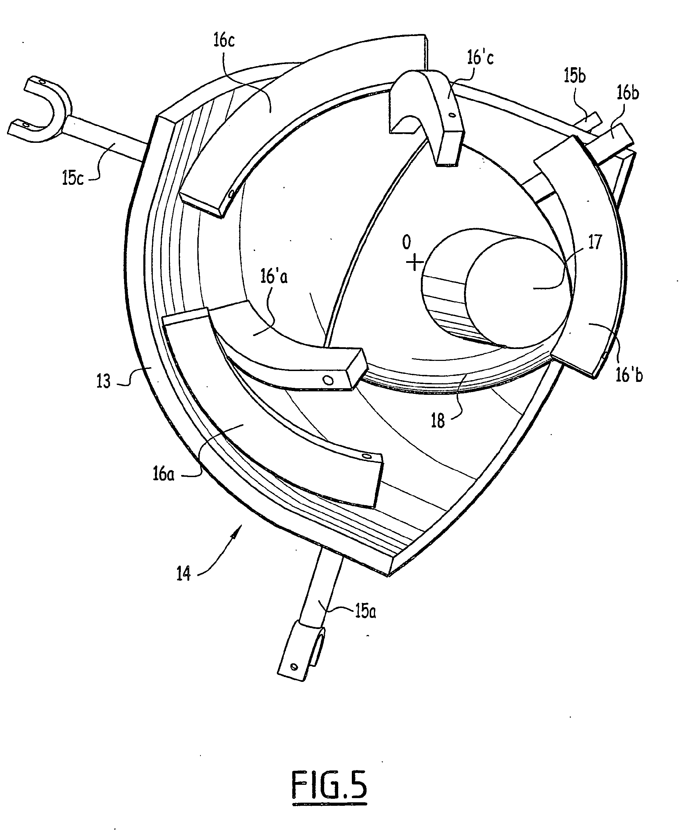

Dans ce cas, on utilise un mécanisme d'orientation 14 à trois degrés de liberté tel que représenté sur la figure 5.

Un mécanisme d'orientation à trois degrés de liberté tel que représenté sur la figure 5 comporte un premier bras 16a, un second bras 16b et un troisième bras 16c qui peuvent être réalisés de manière analogue aux bras 16a et 16b du mode de réalisation à cinq degrés de liberté décrit plus haut. Chacun des bras 16a, 16b et 16c du mécanisme d'orientation 14 est solidaire d'un axe de rotation respectif 15a, 15b, 15c destiné à être relié par un accouplement à cardan à une tige d'actionnement respective d'un mécanisme de commande en rotation associée respectivement à la jambe articulée 7a, 7b ou 7c. Dans ce cas, un ensemble de commande en rotation 20 est associé à chacune des trois jambes articulées du dispositif de déplacement.

Chacun des bras 16a, 16b, 16c du mécanisme d'orientation 14 est relié à une première extrémité d'un bras intermédiaire respectif 16'a, 16'b, 16'c par l'intermédiaire d'un axe d'articulation respectif.

Les secondes extrémités des bras intermédiaires 16'a, 16'b, 16'c sont reliées de manière articulée, par l'intermédiaire de trois axes respectifs, sur le support d'objet 18.

L'ensemble des axes de commande 15a, 15b, 15c et des axes d'articulation des bras intermédiaires sur le premier, le second et le troisième bras et sur le support d'objet 18 orthogonaux entre eux passe par un centre de rotation sphérique O du dispositif d'orientation.

Dans certains cas, il n'est pas nécessaire de mettre en oeuvre un dispositif à cinq degrés de liberté, deux axes de déplacement en translation étant suffisants pour déplacer le mécanisme d'orientation portant l'outil dans un plan, par exemple dans un plan horizontal.

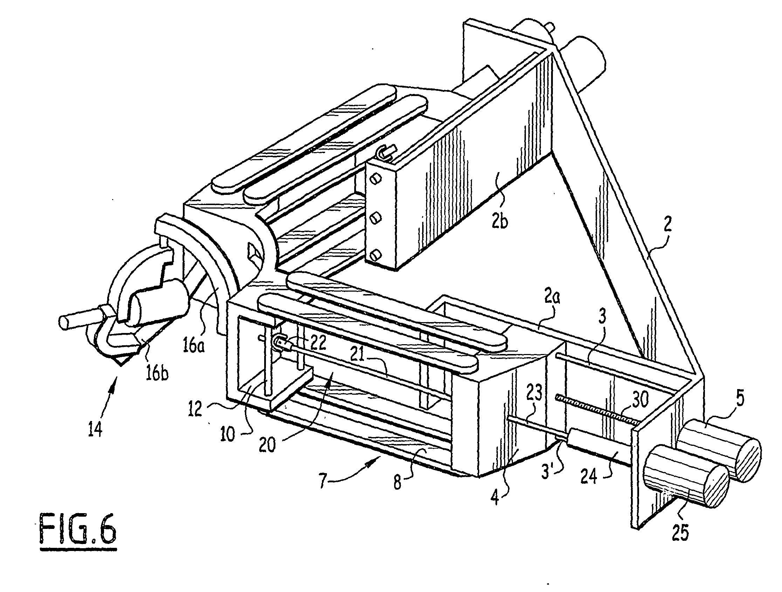

Sur la figure 6, on a représenté un tel dispositif de déplacement et d'orientation à quatre degrés de liberté qui est monté sur un bâti fixe 2 comportant deux montants 2a et 2b dans des dispositions sensiblement perpendiculaires entre elles.

Chacun des éléments de bâti 2a et 2b porte deux barres de guidage 3 et 3' jouant le rôle de glissières pour un chariot 4 entraîné en translation le long des glissières 3 et 3' par une vis 30 entraînée en rotation par un moteur 5 porté par le bâti 2 coopérant avec un écrou à billes du chariot 4 se déplaçant le long des glissières 3, lorsque la vis 30 est entraînée en rotation par un moteur 5 porté par le bâti 2.

Le chariot 4 assure le déplacement en translation d'une extrémité d'une jambe articulée 7 qui peut être constituée par exemple, comme représenté sur la figure 6, par quatre longerons 8 disposés suivant les directions des arêtes d'un parallélépipède et reliés au chariot 4 et à un support 12 de mécanisme d'orientation 8, par l'intermédiaire d'axes 10 qui sont tous parallèles entre eux.

Les supports 12 de mécanisme d'orientation sont reliés, de manière rigide, à un support mobile intermédiaire du mécanisme 14 qui peut être, par exemple, réalisé sous la forme d'un mécanisme d'orientation à deux axes, comme décrit plus haut.

Chacun des bras articulés monté sur un élément de bâti 2a ou 2b comporte un ensemble de commande en rotation du premier bras 16a et du second bras 16b du mécanisme d'orientation 14. Chacun des ensembles de commande en rotation 20 comporte une tige d'actionnement 21 montée à l'intérieur de la jambe articulée dans une disposition parallèle aux longerons 8 et reliée par des cardans tels que 22, d'une part, à un axe de rotation solidaire d'un bras 16a ou 16b et, d'autre part, à une tige de transmission 23 solidaire en rotation par l'intermédiaire d'une douille 24 de l'arbre de sortie d'un moteur 25 porté par le bâti 2, la douille 24 permettant un déplacement en translation de la tige de transmission 23 par rapport au bâti 2 pendant les déplacements en translation de la jambe articulée correspondante tout en assurant la transmission de la rotation entre l'arbre de sortie du moteur 25 et la tige de transmission 23 reliée à la tige d'actionnement 21 pour la mise en rotation de l'axe de commande d'un bras du mécanisme d'orientation 14.

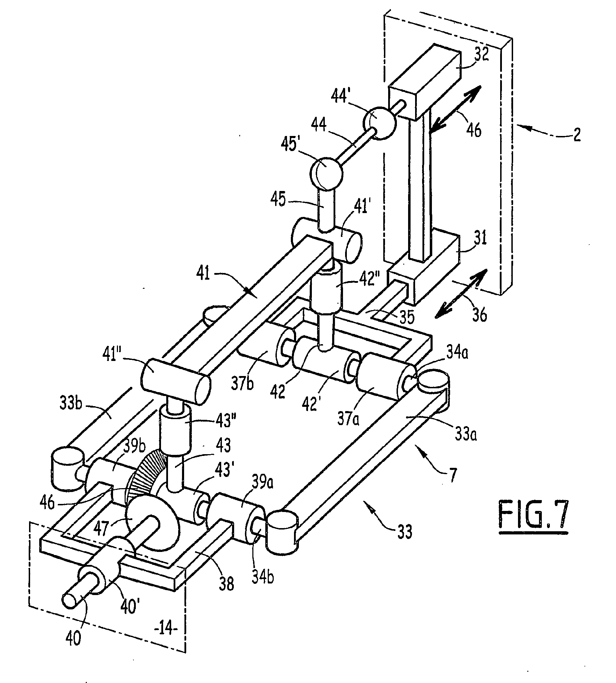

Sur la figure 7, on a représenté une jambe articulée 7 d'un dispositif de déplacement et d'orientation suivant l'invention qui peut être substituée à une jambe articulée telle que 7a, 7b ou 7c d'un dispositif tel que décrit plus haut et qui est réalisée suivant un mode de réalisation différent des modes décrits plus haut.

La jambe 7 utilise pour son déplacement en translation un premier moteur linéaire 31 qui est fixé sur le support fixe 2 du dispositif et un second moteur linéaire 32 pour assurer la mise en rotation d'un axe 40 d'un mécanisme d'orientation qui peut être analogue au mécanisme d'orientation 14 représenté sur les figures 1 à 6.

Le moteur linéaire 31 assure le déplacement en translation dans un sens et dans l'autre, comme indiqué par la double flèche 36, de la jambe articulée 7, par l'intermédiaire d'une pièce de poussée ou de traction 35 entraînée en translation par le moteur linéaire 31.

A sa seconde extrémité, la jambe articulée 7 est reliée au support mobile 13 du mécanisme d'orientation 14 à centre d'orientation sphérique, par l'intermédiaire de la pièce 38 constituant l'équivalent du support de mécanisme d'orientation 12 décrit plus haut.

La jambe articulée 7 est constituée sous la forme d'un cadre comportant deux longerons parallèles 33a et 33b entre lesquels sont montés, aux extrémités des montants, un premier axe 34a et un second axe 34b parallèles entre eux et fixés aux longerons 33a et 33b suivant les angles du cadre 33.

Sur le premier axe 34a sont montés deux paliers rotatifs 37a et 37b par l'intermédiaire desquels le cadre 33 est relié à la pièce de poussée et de traction 35 transmettant les déplacements du moteur linéaire 31.

Sur le second axe 34b sont montés deux paliers rotatifs 39a et 39b par l'intermédiaire desquels le support de mécanisme d'orientation 38 est relié au cadre 33.

La partie mobile du moteur linéaire 32 est reliée, par l'intermédiaire d'articulations universelles 44' et 45' et de tiges 44 et 45, à un palier 41' monté à l'extrémité d'un longeron 41 d'un ensemble de déplacement en rotation de l'axe 40, par le moteur linéaire 32. Le longeron 41 est relié par un palier 41' à un montant comportant une tige 42 et un palier 42", à un palier 42' monté rotatif sur l'axe 34a entre les paliers 37a et 37b.

A sa seconde extrémité longitudinale, le longeron 41 du dispositif de mise en rotation de l'axe 40 est relié de manière articulée par un second palier 41" à un montant comportant un palier 43" et une tige 43 relié à un palier 43' monté rotatif sur le second axe 34b.

Le palier 43' est solidaire d'une couronne dentée conique 46 engrenant avec un pignon conique 47 calé sur l'arbre 40 monté rotatif dans le support 38 par l'intermédiaire d'un palier 40'.

Comme il est visible sur la figure 7, les déplacements en translation de la jambe 7 dans son ensemble (et donc du mécanisme d'orientation 14) sont obtenus grâce au moteur linéaire 31.

Le déplacement en rotation de l'axe 40 relié à un bras courbe du mécanisme d'orientation 14 est obtenu à partir du moteur linéaire 32 qui, par l'intermédiaire de la tige 44 et des articulations de cardan 44' et 45,' entraîne en rotation autour de l'axe du palier 42' et du premier arbre 34a, les tiges 45 et 42. L'ensemble constitué par le premier montant comportant la tige 42 et le palier de liaison 42", le longeron 41, et le second montant comportant la tige 43' et le palier de liaison 43" constitue un parallélogramme articulé qui se déforme lorsqu'on déplace la partie mobile du moteur linéaire 32 dans un sens ou dans l'autre, comme représenté par la double flèche 46. Le palier 43' et la roue dentée conique 46 sont mis en rotation autour de l'axe du palier 43' et du second axe 34b, ce qui met en rotation le pignon conique 47 et l'axe 40 du mécanisme d'orientation à centre sphérique 14. Une amplification de la rotation peut être obtenue en prévoyant un nombre de dents sur la roue 46 et le pignon 47 dans un certain rapport.

On obtient ainsi tous les déplacements voulus pour une jambe articulée, à partir de deux moteurs linéaires montés sur le support fixe 2 du dispositif.

Bien entendu, on peut utiliser, par exemple dans le cas d'un mode de réalisation analogue au mode de réalisation représenté sur les figures 1 et 2, deux jambes articulées analogues à la jambe articulée représentée sur la figure 7 et une troisième jambe articulée telle que la jambe 7c représentée sur la figure 1 ou telle que représentée sur la figure 7 limitée au cadre 33, au moteur linéaire 31 et aux pièces de liaison 35 et 38.

Dans le cas de tous les modes de réalisation, le dispositif de déplacement et d'orientation suivant l'invention présente une configuration parfaitement isotrope. De ce fait, ce dispositif de déplacement et d'orientation peut être adapté à de nombreux types d'usinage. En outre, les organes de commande de position (les jambes articulées) et d'orientation (le mécanisme d'orientation) sont parfaitement découplés. On peut ainsi réaliser le dispositif à partir d'éléments modulaires. En outre, les puissances des moteurs utilisés peuvent être adaptées selon le type d'application, pour chacun des organes de commande de position et d'orientation, ce qui n'est pas possible par exemple dans le cas d'une architecture parallèle de type "Gough-Stewart" où tous les moteurs doivent avoir la même puissance.

Du fait de ses caractéristiques, le dispositif suivant l'invention peut être appliqué en particulier à des usinages nécessitant la réalisation de trajectoires de formes complexes à grande vitesse, par exemple pour des opérations de prototypage rapide ou encore à des opérations de manipulation du type "pick and place". En outre, les propriétés d'isotropie et l'espace de travail régulier et bien défini du dispositif permettent de l'utiliser comme mécanisme à retour d'efforts, dans le cadre d'une application de restitution d'une interface de réalité virtuelle avec ou sans retour haptique (c'est-à-dire avec ou sans création d'une sensation de contact pour l'utilisateur). Par exemple, le dispositif peut être utilisé pour la détection de contacts ou de chocs dans le cas d'usinages et de manipulations rapides.

Dans le cas des opérations de prototype rapide, le dispositif suivant l'invention peut être utilisé en particulier pour déplacer une torche laser assurant un découpage de formes complexes ou encore la polymérisation d'une matière plastique pour la réalisation d'une pièce complexe.

## Revendications

1. Dispositif de déplacement et d'orientation d'un objet dans l'espace comportant un support d'objet (18) porté par un support mobile intermédiaire (13) relié à un bâti fixe (2) par des moyens de liaison articulés (7a, 7b, 7c), comportant:
- des moyens de déplacement du support mobile intermédiaire (13) par rapport au bâti fixe (2) conservant l'orientation du support mobile intermédiaire (13) par rapport au bâti fixe (2) et comportant des actionneurs (5a, 5b, 5c) de déplacement en translation d'une partie d'extrémité de chacun des moyens de liaison articulés (7a, 7b, 7c) portés par le bâti fixe (2), et
- un mécanisme d'orientation (14) du support d'objet (18) par rapport au support mobile intermédiaire (13),
**caractérisé par le fait que** le mécanisme d'orientation du support d'objet comporte au moins deux ensembles de déplacement en rotation (15a, 15b, 16a, 16b, 16'b, 25) comportant chacun un axe de commande (15a, 15b, 15c) monté rotatif sur le support mobile intermédiaire (13) et entraîné en rotation par un actionneur de mise en rotation respectif (25) portés par le bâti fixe (2) et relié à l'axe de commande correspondant (15a, 15b, 15c) par un moyen de transmission (21) monté sur des cardans (22, 22'), et
un premier bras courbe solidaire, à une première extrémité, de l'axe de commande correspondant (15a, 15b, 15c) et relié de manière articulée au support d'objet (18), à une seconde extrémité, par au moins un axe d'articulation, les axes de commande (15a, 15b) et les axes d'articulation des bras courbes (16a, 16b, 16c, 16'a, 16'b, 16'c) ayant des directions orthogonales entre elles et concourantes en un point O constituant un point de rotation sphérique.

2. Dispositif suivant la revendication 1, **caractérisé par le fait qu**'il comporte au moins deux actionneurs (5a, 5b, 5c) de déplacement en translation, suivant au moins deux axes d'un trièdre trirectangle, de parties d'extrémité d'au moins deux moyens de liaison articulés (7a, 7b, 7c) comportant chacun une jambe articulée s'étendant dans une direction générale longitudinale entre le bâti fixe (2) et le support mobile intermédiaire (13).

3. Dispositif suivant la revendication 2, **caractérisé par le fait que** la jambe articulée (7a, 7b, 7c) comporte deux longerons (8) de direction longitudinale formant avec des pièces de liaison d'extrémité (9, 12), un parallélogramme articulé reliant un élément mobile (4a, 4b, 4c) d'un actionneur de déplacement en translation (5a, 5b, 5c) et le support mobile intermédiaire (13), de manière que le parallélogramme articulé puisse se déformer dans son plan et pivoter autour d'un axe contenu dans son plan pour se déplacer dans une direction normale à son plan.

4. Dispositif suivant la revendication 3, **caractérisé par le fait que** l'arbre de transmission (21) de chacun des ensembles de déplacement en rotation (15a, 15b, 16a, 16b, 16'b, 25) est disposé entre les longerons d'une jambe articulée (7a, 7b, 7c) correspondante.

5. Dispositif suivant la revendication 1, **caractérisé par le fait que** les moyens de déplacements du support mobile intermédiaire (13) comportent chacun un premier moteur linéaire (31) de déplacement en translation d'une partie d'extrémité d'un moyen de liaison articulé (7) porté par le bâti fixe (2), que le moyen de liaison articulé (7) est réalisé sous la forme d'un premier cadre (33) articulé comportant deux longerons parallèles (33a, 33b), un premier axe (34a) à la première extrémité du moyen de liaison articulé (7) relié à un élément de poussée et de traction (35) déplacé par le moteur linéaire (31) par l'intermédiaire de paliers (37a, 37b) montés rotatifs sur le premier axe (34a), un second axe (34b) parallèle au premier axe (34a) à la seconde extrémité du moyen de liaison articulé (7), une pièce (38) de liaison du mécanisme d'orientation (14) à l'élément de liaison articulé (7) relié à des paliers (39a, 39b) montés rotatifs sur le second axe (34b) dans laquelle est monté rotatif un axe de commande (40) du mécanisme d'orientation (14), un second moteur linéaire (32) porté par le bâti fixe (2) relié par l'intermédiaire de tiges et d'articulation (44, 45) et (44', 45') à un second cadre en parallélogramme articulé constitué par un longeron (41) sensiblement parallèle aux longerons (33a, 33b) du premier cadre (33) et deux montants (42, 43) reliés à des paliers (42', 43') montés rotatifs respectivement sur le premier et le second axes (34a, 34b) du premier cadre (33) de l'élément articulé (7), placés dans une disposition perpendiculaire au premier et au second axes (34a, 34b) et parallèles entre eux et reliés de manière articulée à une première et à une seconde extrémités du longeron (41) du second cadre articulé en parallélogramme, les tiges de liaison (44, 45) de l'élément mobile du second moteur linéaire (32) et du second cadre articulé étant reliées au second cadre articulé au niveau d'une première extrémité dans le prolongement du premier montant (42) solidaire du palier (42') monté sur le premier axe (34a) et le palier de montage rotatif (43') du second montant (43) sur le second axe (34b) étant solidaire d'une couronne dentée (46) à denture conique engrenant avec un pignon (47) à denture conique solidaire de l'axe de commande (40) du mécanisme d'orientation (14), à la seconde extrémité de l'élément articulé (7).

6. Dispositif suivant l'une quelconque des revendications 1 à 5, **caractérisé par le fait que** le premier bras courbe (16a) d'un premier ensemble de déplacement (15a, 16a) est relié au support d'objet (18), à sa seconde extrémité, par un axe d'articulation (13a) et que le premier bras courbe (16b) du second ensemble de déplacement (15b, 16b) est relié de manière articulée à sa seconde extrémité à une première extrémité d'un bras courbe intermédiaire (16'b) dont la seconde extrémité est reliée de manière articulée au support d'objet (18).

7. Dispositif suivant l'une quelconque des revendications 1 à 5, **caractérisé par le fait qu'**il comporte trois ensembles de déplacement en rotation comportant chacun un axe de commande (15a, 15b, 15c) monté rotatif sur le support mobile intermédiaire (13) et entraîné en rotation par un actionneur respectif (25), un premier bras courbe (16a, 16b, 16c) solidaire à une première extrémité d'un axe de commande respectif (15a, 15b, 15c) et un second bras courbe intermédiaire (16'a, 16'b, 16'c) articulé, à une première extrémité, sur une seconde extrémité du premier bras courbe et, à une seconde extrémité, sur le support d'objet (18).

8. Utilisation d'un dispositif de déplacement et d'orientation d'un objet dans l'espace, suivant l'une quelconque des revendications 1 à 7, pour réaliser le déplacement d'un outil (17) dans une opération d'usinage rapide de formes complexes.

9. Utilisation d'un dispositif de déplacement et d'orientation d'un objet dans l'espace suivant la revendication 8, pour réaliser le déplacement d'une torche laser dans une opération de découpage de formes complexes.

10. Utilisation d'un dispositif de déplacement et d'orientation d'un objet dans l'espace, suivant l'une quelconque des revendications 1 à 7, pour réaliser le déplacement d'une torche laser assurant la polymérisation d'une matière plastique, dans une opération de réalisation rapide d'un prototype.

11. Utilisation d'un dispositif de déplacement et d'orientation d'un objet dans l'espace selon l'une quelconque des revendications 1 à 7, pour réaliser une interface de réalité virtuelle, avec ou sans retour haptique.

## Claims

1. Device for movement and orientation of an object in space consisting of a fixture (18) borne by an intermediate movable support (13) connected to a fixed frame (2) by articulated connecting means (7a, 7b, 7c), comprising:
- means for moving the intermediate movable support (13) in relation to the fixed frame (2) keeping the orientation of the intermediate movable support (13) in relation to the fixed frame (2) and comprising activators (5a, 5b, 5c) for linear movement of an end part of each of the articulated connecting means (7a, 7b, 7c) borne by the fixed frame (2), and
- a mechanism (14) for orientation of the fixture (18) in relation to the intermediate movable support (13), **characterised in that** the mechanism for orientation of the fixture has at least two assemblies for rotary movement (15a, 15b, 16a, 16b, 16'b, 25), each of them with an operating pin (15a, 15b, 15c) rotary-mounted on the intermediate movable support (13) and driven round by a respective activator for starting rotation (25) carried by the fixed frame (2) and connected to the corresponding drive shaft (15a, 15b, 14c) by a means of transmission (21) mounted on cardan joints (22, 22'), and a first curved arm integral, at a first end, with the corresponding drive shaft (15a, 15b, 15c) and hinged to the object (18) support by at least one articulation pin, the drive shafts (15a, 15b) and the hinge pins of the curved arms (16a, 16b, 16c, 16'a, 16'b, 16'c) having orthogonal directions with each other, coming together and converging at a point O which is a spherical rotation point.

2. Device according to Claim 1, **characterised in that** it has at least two activators (5a, 5b 5c) for linear movement, along at least two axes of a trirectangular trihedron, end parts of at least two means of articulated connection (7a, 7b, 7c), each having an articulated leg extending in a generally longitudinal direction between the fixed frame (2) and the intermediate movable support (13).

3. Device according to Claim 2, **characterised in that** the articulated leg (7a, 7b, 7c) has two members (8) in the longitudinal direction forming with end connecting components (9, 12) an articulated parallelogram connecting a moving part (4a, 4b, 4c) of a linear movement activator (5a, 5b, 5c) and the intermediate movable support (13) so that the articulated parallelogram can be deformed in its plane and pivot around an axis contained in its plane in order to move in a direction perpendicular to its plane.

4. Device according to Claim 3, **characterised in that** the transmission shaft (21) of each of the rotary movement assemblies (15a, 15b, 16a, 16b, 16'b, 25) is arranged between the longitudinal members of a corresponding articulated leg (7a, 7b, 7c).

5. Device according to Claim 1 **characterised in that** the means for movement of the intermediate movable support (13) each has a first linear motor (31) for linear movement of an end section of an articulated means of connection (7) borne by the fixed frame (2), the articulated means of connection (7) is in the form of a first articulated frame (33) comprising two parallel longitudinal members (33a, 33b), a first axis (34a) at the first end of the articulated means of connection (7) connected to a push and pull component (35) moved by the linear motor (31) by means of bearings (37a, 37b) fitted to rotate on the first axis (34a), a second axis (34b) parallel to the first axis (34a) at the second end of the articulated means of connection (7), a part (38) for connection of the orientation mechanism (14) to the articulated connection part (7) connected to bearings (39a, 39b) fitted to rotate on the second axis (34b) in which a shaft (40) for operation of the orientation mechanism (14) is fitted to rotate, a second linear motor (32) borne by the fixed frame (2) connected by means of rods and articulation (44, 45) and (44', 45') to a second frame in an articulated parallelogram made up of a longitudinal member (41) more or less parallel to the longitudinal members (33a, 33b) of the first frame (33) and two posts (42, 43) connected to bearings (42', 43') fitted to rotate respectively on the first and the second shafts (34a, 34b) of the first framework (33) of the articulated part (7), placed in an arrangement perpendicular to the first and the second shafts (34a, 34b) and parallel with each other and connected so as to be articulated to the first and second ends of the longitudinal member (41) of the second articulated framework as a parallelogram, the connecting rods (44, 45) of the movable part of the second linear motor (32) and of the second articulated framework being connected to the second framework articulated at the level of a first end in the extension of the first post (42) integral with the bearing (42') fitted on the first shaft (34a) and the rotary arrangement bearing (43') of the second post (43) on the second shaft (34b) being integral with a crown wheel (46) with tapered teeth meshing with a tapered toothed pinion (47) integral with the shaft (40) controlling the orientation mechanism (14), at the second end of the articulated part (7).

6. Device according to any one of the Claims 1 to 5, **characterised in that** the first curved arm (16a) of a first movement assembly (15a, 16a) is connected to the fixture (18), at its second end, by a hinge pin (13a), and **in that** the first curved arm (16b) of the second movement assembly (15b, 16b) is connected so as to be articulated at its second end to a first end of an intermediate curved arm (16'b), the second end of which is hinged to the fixture (18).

7. Device according to any one of the Claims 1 to 5, **characterised in that** it has three assemblies for rotary movement, each with an operating shaft (15a, 15b, 15c) fitted to rotate on the intermediate movable support (13) and driven round by a respective activator (25), a first curved arm (16a, 16b, 16c) integral with a first end of a respective operating shaft (15a, 15b, 15c) and a second intermediate curved arm (16'a, 16'b, 16'c) articulated, at a first end, to a second end of the first curved arm and, at a second end, to the fixture (18).

8. Use of a device for movement and orientation of an object in space, according to any one of the Claims 1 to 7, for effecting movement of a tool (17) in an operation for quick machining of complex shapes.

9. Use of a device for movement and orientation of an object in space according to Claim 8, in order to effect movement of a laser beam torch in an operation for cutting out complex shapes.

10. Use of a device for movement and orientation of an object in space, according to any one of the Claims 1 to 7, in order to effect movement of a laser beam torch ensuring polymerisation of a plastic material, in an operation for making a prototype quickly.

11. Use of a device for movement and orientation of an object in space, according to any one of the Claims 1 to 7, in order to make a virtual reality interface with or without haptic return.

## Patentansprüche

1. Vorrichtung zum Bewegen und Ausrichten eines Objekts im Raum, umfassend einen Objektträger (18), der von einem beweglichen Zwischenträger (13) getragen ist, der mit einem feststehenden Gerstell (2) durch gelenkige Verbindungsmittel (7a, 7b, 7c) verbunden ist, umfassend:
- Mittel zum Bewegen des beweglichen Zwischenträgers (13) bezüglich des feststehenden Gestells (2), die die Ausrichtung des beweglichen Zwischenträgers (13) bezüglich des feststehenden Gestells (2) beibehalten und Stellglieder (5a, 5b, 5c) zur Translationsbewegung eines Endteils jedes der vom feststehenden Gestell (2) getragenen gelenkigen Verbindungsmittel (7a, 7b, 7c) umfassen, und
- einen Mechanismus (14) zum Ausrichten des Objektträgers (18) bezüglich des beweglichen Zwischenträgers (13),
**dadurch gekennzeichnet, dass** der Mechanismus zum Ausrichten des Objektträgers mindestens zwei Drehbewegungseinheiten (15a, 15b, 16a, 16b, 16'b, 25) umfasst, die jeweils eine Steuerachse (15a, 15b, 15c) umfassen, die auf dem beweglichen Zwischenträger (13) drehbar montiert ist und durch ein jeweiliges Drehungsstellglied (25) in Drehung versetzt wird, das von dem feststehenden Gestell (2) getragen ist und mit der entsprechenden Steuerachse (15a, 15b, 15c) durch ein auf Kardangelenken (22, 22') montiertes Übertragungsmittel (21) verbunden ist, sowie
einen ersten gekrümmten Arm, der an einem ersten Ende mit der entsprechenden Steuerachse (15a, 15b, 15c) fest verbunden ist und an einem zweiten Ende mit dem Objektträger (18) durch mindestens eine Gelenkachse gelenkig verbunden ist, wobei die Steuerachsen (15a, 15b) und die Gelenkachsen der gekrümmten Arme (16a, 16b, 16c, 16'a, 16'b, 16'c) zueinander senkrechte Richtungen haben, die an einem einen sphärischen Drehpunkt bildenden Punkt O zusammenlaufen.

2. Vorrichtung nach Anspruch 1, **dadurch gekennzeichnet, dass** sie mindestens zwei Stellglieder (5a, 5b, 5c) zur Translationsbewegung gemäß mindestens zwei Achsen eines rechtwinklingen Trieders von Endteilen von mindestens zwei gelenkigen Verbindungsmitteln (7a, 7b, 7c) umfasst, die jeweils einen gelenkigen Schenkel umfassen, der sich in einer allgemeinen Längsrichtung zwischen dem feststehenden Gestell (2) und dem beweglichen Zwischenträger (13) erstreckt.

3. Vorrichtung nach Anspruch 2, **dadurch gekennzeichnet, dass** der gelenkige Schenkel (7a, 7b, 7c) zwei Längsstangen (8) mit Längsrichtung umfasst, die mit Endverbindungsstücken (9, 12) ein Gelenkparallelogramm bilden, das ein bewegliches Element (4a, 4b, 4c) eines Stellglieds (5a, 5b, 5c) zur Translationsbewegung und den beweglichen Zwischenträger (13) verbindet, so dass das Gelenkparallelogramm sich in seiner Ebene verformen und sich um eine in seiner Ebene liegende Achse verschwenken kann, um sich in einer zu seiner Ebene senkrechten Richtung zu bewegen.

4. Vorrichtung nach Anspruch 3, **dadurch gekennzeichnet, dass** die Übertragungswelle (21) jeder der Drehbewegungseinheiten (15a, 15b, 16a, 16b, 16'b, 25) zwischen den Längsstangen eines entsprechenden gelenkigen Schenkels (7a, 7b, 7c) angeordnet ist.

5. Vorrichtung nach Anspruch 1, **dadurch gekennzeichnet, dass** die Mittel zur Bewegung des beweglichen Zwischenträgers (13) jeweils einen ersten linearen Motor (31) zur Translationsbewegung eines Endteils eines von dem feststehenden Gestell (2) getragenen gelenkigen Verbindungsmittels (7) umfassen, dass das gelenkige Verbindungsmittel (7) in der Form eines ersten Gelenkrahmens (33) ausgeführt ist, der umfasst: zwei parallele Längsstangen (33a, 33b), eine erste Achse (34a) am ersten Ende des gelenkigen Verbindungsmittels (7), die mit einem Schub- und Zugelement (35) verbunden ist, das durch den linearen Motor (31) über Lager (37a, 37b) bewegt wird, die auf der ersten Achse (34a) drehbar montiert sind, eine zweite, zur ersten Achse (34a) parallele Achse (34b) am zweiten Ende des gelenkigen Verbindungsmittels (7), ein Teil (38) zur Verbindung des Ausrichtmechanismus (14), der mit auf der zweiten Achse (34b) drehbar montierten Lagern (39a, 39b) verbunden ist, mit dem gelenkigen Verbindungselement (7), in welchem Teil (38) eine Achse (40) zur Steuerung des Ausrichtmechanismus (14) drehbar montiert ist, einen zweiten von dem feststehenden Gestell (2) getragenen linearen Motor (32), der über Stangen und Gelenke (44, 45) und (44', 45') mit einem zweiten Gelenkparallelogrammrahmen verbunden ist, der aus einem zu den Längsstangen (33a, 33b) des ersten Rahmens (33) im wesentlichen parallelen Längsstange (41) und zwei Ständern (42, 43) besteht, die mit Lagern (42', 43') verbunden sind, die auf der ersten bzw. auf der zweiten Achse (34a, 34b) des ersten Rahmens (33) des gelenkigen Elements (7) drehbar montiert sind, in einer zur ersten und zur zweiten Achse (34a, 34b) senkrechten Anordnung vorgesehen sind und zueinander parallel sind und mit einem ersten und einem zweiten Ende der Längsstange (41) des zweiten Gelenkparallelogrammrahmens gelenkig verbunden sind, wobei die Stangen (44, 45) zur Verbindung des beweglichen Elements des zweiten linearen Motors (32) und des zweiten Gelenkrahmens mit dem zweiten Gelenkrahmen auf Höhe eines ersten Endes in der Verlängerung des ersten Ständers (42) verbunden sind, der mit dem auf der ersten Achse (34a) montierten Lager (42') fest verbunden ist, und das Lager (43') zur drehbaren Montage des zweiten Ständers (43) auf der zweiten Achse (34b) mit einem Zahnkranz (46) mit konischer Verzahnung fest verbunden ist, das mit einem Zahnrad (47) mit konischer Verzahnung in Eingriff ist, das mit der Achse (40) zur Steuerung des Ausrichtmechanismus (14) am zweiten Ende des gelenkigen Elements (7) fest verbunden ist.

6. Vorrichtung nach einem der Ansprüche 1 bis 5, **dadurch gekennzeichnet, dass** der erste gekrümmte Arm (16a) einer ersten Bewegungseinheit (15a, 16a) mit dem Objektträger (18) an seinem zweiten Ende durch eine Gelenkachse (13a) verbunden ist und dass der erste gekrümmte Arm (16b) der zweiten Bewegungseinheit (15b, 16b) an seinem zweiten Ende mit einem ersten Ende eines gekrümmten Zwischenarms (16'b) gelenkig verbunden ist, dessen zweites Ende mit dem Objektträger (18) gelenkig verbunden ist.

7. Vorrichtung nach einem der Ansprüche 1 bis 5, **dadurch gekennzeichnet, dass** sie drei Drehbewegungseinheiten umfasst, die jeweils umfassen: eine Steuerachse (15a, 15b, 15c), die auf dem beweglichen Zwischenträger (13) drehbar montiert ist und durch ein jeweiliges Stellglied (25) in Drehung versetzt wird, einen ersten gekrümmten Arm (16a, 16b, 16c), der an einem ersten Ende mit einer jeweiligen Steuerachse (15a, 15b, 15c) fest verbunden ist, und einen zweiten gekrümmten Zwischenarm (16'a, 16'b, 16'c), der an einem ersten Ende an einem zweiten Ende des ersten gekrümmten Arms und an einem zweiten Ende an dem Objektträger (18) angelenkt ist.

8. Verwendung einer Vorrichtung zum Bewegen und Ausrichten eines Objekts im Raum nach einem der Ansprüche 1 bis 7 für die Ausführung einer Bewegung eines Werkzeugs (17) bei einem Arbeitsgang der schnellen Bearbeitung von komplexen Formen.

9. Verwendung einer Vorrichtung zum Bewegen und Ausrichten eines Objekts im Raum nach Anspruch 8 zur Ausführung der Bewegung eines Laserbrenners bei einem Arbeitsgang des Schneides von komplexen Formen.

10. Verwendung einer Vorrichtung zum Bewegen und Ausrichten eines Objekts im Raum nach einem der Ansprüche 1 bis 7 für die Ausführung der Bewegung eines Laserbrenners zur Polymerisierung eines Kunststoffs in einem Arbeitsgang der schnellen Herstellung eines Prototyps.

11. Verwendung einer Vorrichtung zum Bewegen und Ausrichten eines Objekts im Raum nach einem der Ansprüche 1 bis 7 für die Herstellung einer Schnittstelle einer virtuellen Realität mit oder ohne haptischer Ausgabe.
